# EUROPEAN PATENT APPLICATION

(11) **EP 4 687 330 A1**
(43) Date of publication of application: **04.02.2026**
(21) Application number: 24191426.6
(22) Date of filing: 29.07.2024
(51) Int. Cl.: H04L 41/082, H04L 41/0866, H04L 41/12

(54) **NETWORK PLANNING APPLIANCE**

(71) Applicant: Siemens Aktiengesellschaft, 80333 München (DE)
(72) Inventor: Deric, Nemanja, 80807 München (DE); Ziegler, Alexander, 76199 Karlsruhe (DE); Kulkarni, Vivek, 80997 München (DE)
(74) Representative: Siemens Patent Attorneys

(57) **Abstract**

The present embodiments relate to network planning appliance designed for configuring entities in an industrial network. It includes a digital twin interface module for accessing one or more digital twins, which define network entities, their attributes, and connections, representing the network's configuration. The appliance also features an orchestration module with a user interface for receiving user input and determining corresponding intents. The orchestration module issues tasks to amend the network configuration in line with the intents. A validation module validates the amended network configuration to ensure it conforms to the intent.

## Description

### Technical Field

The disclosed embodiments generally relate to the field of tools for planning industrial networks. More specifically, the disclosed embodiments relate to a network planning appliance for configuring network entities in an industrial network.

### Background Art

Traditional industrial networks often follow a fixed architectural structure where devices used for the same purpose are located close to each other in a factory cell. This proximity allows for low-latency and real-time Quality of Service (QoS) through specialized industrial protocols like PROFINET, an abbreviation of Process Field Network, which is an industry technical standard for data communication over Industrial Ethernet. Network planning tools used for planning and provisioning these networks, such as a well-known TIA Portal or Totally Integrated Automation Portal, a Siemens engineering platform offering a complete package of automation solutions in engineering processes and machine manufacturing. Such network planning tools, are, however often proprietary and specialized. They may necessitate manual input of device models and locations to generate a valid network configuration solution. Moreover, network planning tools may be inflexible due to their support for a limited number of protocols. Existing network planning tools may be difficult to use and to navigate, and often present users with inconsistent and overwhelming interfaces, preventing users from making effective use of the tools.

In the field of industrial networks, there is a discernible trend towards more flexible and interconnected systems. These new systems aim to overcome the limitations of traditional networks by supporting a wider range of protocols and offering more flexibility in terms of device placement and network configuration. These new systems leverage technologies like digital twins and cloud computing to improve efficiency and enable real-time monitoring and optimization of industrial processes. Despite these advancements, the transition from traditional to modern industrial networks may be challenging due to factors like interoperability issues and the need for significant infrastructure changes. In the pursuit of optimizing operational efficiency and catering to dynamic product requirements, it is imperative for manufacturing facilities to embody flexibility and extensibility. Consequently, plant operators emerge as pivotal entities in this transformative process as they are entrusted with the responsibility of not merely configuring a process but also continually reconfiguring both the physical machinery and the factory network. This reconfiguration is instrumental in promptly adapting to fluctuating production needs, optimizing the utilization of resources, and seamlessly fulfilling customer demands. A continuous adaptability of the physical machinery and the factory network, steered by the plant operators, forms a cornerstone of a resilient manufacturing ecosystem that can thrive amidst changing market dynamics and customer preferences.

In addition, to augment a utilization of resources, traditional hardware controllers embedded in factory settings will transition towards virtualization and be operated on multifaceted, general-purpose servers integrated within the factory infrastructure. This implies that as opposed to running dedicated hardware Programmable Logic Controllers or PLC in factory cells, there will be virtualized versions of these PLCs, referred to as vPLCs, operating in a local cloud or edge cloud environment.

The prevailing planning tools presently utilized for the planning of industrial networks are mostly unsuitable for current and future network infrastructures. One of the primary reasons is their limited automation support. The user or plant operator is required to manually input all parameters, including predefined static network topologies, device models, and device locations. This manual process can be time-consuming and prone to errors. Another significant limitation is the absence of reconfiguration support. These tools typically do not support network reconfiguration. Consequently, if a plant operator wishes to modify a portion of the network, the planning procedure must be initiated from the beginning, leading to inefficiencies.

Furthermore, contemporary planning tools utilized for the planning of industrial networks provide restricted device emulation and scalability support. For instance, current field bus devices are emulated via dedicated hardware solutions (e.g., for Factory Acceptance Tests) with tools like SIMBA and »Simulation Unit«. However, these hardware solutions only support the emulation of a limited number of devices and are realized on dedicated hardware, thereby offering lower scalability. While current implementations have been sufficient for current cell networks, as these are relatively small and do not require significant scalability, requirements will increase with the advent of future converged infrastructures. These future infrastructures will likely involve a significantly higher number of devices, thereby necessitating greater scalability and more robust emulation support.

Lastly, contemporary planning tools may only support a limited number of protocols. However, future flexible converged IT/OT infrastructures will necessitate the utilization of a multitude of protocols.

### Summary of the Invention

According to various embodiments of the present invention, a network planning appliance for configuring network entities in an industrial network is provided, including:
- a digital twin interface module (DT) for accessing at least one digital twin defining network entities, attributes of network entities and/or connections between network entities, wherein one or more of said at least one digital twin represent a configuration of the industrial network;
- an orchestration module (OM) including a user interface for receiving input from a user and for determining an intent corresponding to the received input, orchestration module (OM) being configured to issue tasks for amending the configuration of the industrial network in conformance with the intent;
- a validation module (SG) configured to validate the amended network configuration in conformance with the intent.

Amending the configuration of the industrial network in conformance with the intent may include the act of configuring the network entities in an industrial network in conformance with the amended configuration in order to conclude the network planning.

The embodiments advantageously eliminate laborious tasks of manually providing the factory infrastructure as an input to the network planner. Using the digital twin interface module for accessing one or more digital twins as leveraged by the invention inherently provides data about the industrial network which may be enriched at wish by infrastructure data up to to a factory level along with respective states of the infrastructure. A user or the plant operator may merely need to specify intended changes as an input.

The embodiments advantageously accelerate network configurations and re-configurations leveraging a utilization of cloud computing, thereby enabling a usage of the proposed network planning appliance to swiftly test out network planning solutions in a virtual domain deployed in the cloud - which may include the digital twin - prior to deploying the network planning solutions in the real domain, or in a factory. This may advantageously eliminate the need for manual testing of the network planning solution in a factory.

In terms of scalability, the proposed network planning appliance is able to outperform dedicated network planning tools running on a single server. As the network planning appliance may be executed in the cloud, it can generate a solution more quickly, thereby offering superior scalability.

Furthermore, the proposed network planning appliance utilizes one or more digital twins being synchronized with a cell-level or factory-level infrastructure and the corresponding state of the infrastructure. This enables the proposed network planning appliance to detect infrastructure changes in the factory, such as failed devices or links, and automatically issue or propose amended network planning solutions. For instance, in the event of a device failure, the network planning tool may automatically detect the failure and issue a response proposing a new device to be installed at a specific location, as determined by the orchestration module. This reduces overall downtime in a factory and enables better utilization of resources, such as networking devices.

### Description of Embodiments

According to an embodiment, amending the configuration of the industrial network may include issuing tasks for generating, testing and/or verifying the network configuration in conformance with the intent. By including tasks for generating, testing, and verifying the network configuration, the configuration may be tested and verified prior to its implementation using known simulation capabilities of digital twins

According to an embodiment, determining an intent corresponding to the received input may comprise obtaining context information including a history of interactions between the user and the network planning appliance and determining the intent based on the context information. Considering the history of interactions, the appliance may better understand the user's preferences, past actions, and overall context. This may lead to more personalized and effective network configurations.

According to an embodiment, determining an intent corresponding to the received input may comprise inflecting an objective from the received input the further objective being treated as intent and determining tasks and measures to be implemented in the industrial network to achieve this intent. This embodiment allows for a direct determination of the user's intent. By inflecting or extracting an objective directly from the user's input, the appliance may quickly identify the user's goals and immediately begin determining the necessary tasks and measures.

5. A method for configuring network entities in an industrial network, the network planning appliance including the steps of:
- accessing, by a digital twin interface module (DT), at least one digital twin defining network entities, attributes of network entities and/or connections between network entities, wherein one or more of said at least one digital twin represent a configuration of the industrial network;
- receiving, by an orchestration module (OM), input from a user and for determining an intent corresponding to the user input and issuing tasks for amending the configuration of the industrial network in conformance with the intent;
- validating, by a validation module (SG), the amended network configuration in conformance with the intent.

According to an embodiment, digital twins, which are usually spread across the network entities in a cloud environment, may be continuously or periodically checked to identify state changes related to network entities, attributes of network entities, and/or connections between network entities. This embodiment provides a proactive or a retroactive approach that may precede or follow the actual method of network planning. By continuously or periodically checking the state of digital twins spread across the network entities, the appliance may identify changes related to network entities, their attributes, and connections between them in real-time or near real-time.

According to an embodiment, a step of implementing the network configuration in the network entities may conclude the network planning. This final step following the steps of testing, simulation and/or verifying the configuration may or may not be taken, depending on whether the network planning appliance was used for actual implementation or for simulation purposes.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1: illustrates a schematic chart of internal and external interactions of a network planning appliance according to a possible embodiment of the invention;
- Fig. 2: illustrates a schematic chart of user interactions between a user and a network planning tool as known from the prior art; and;
- Fig. 3: illustrates a schematic process chart depicting an exchange of data transmissions in a network planning process according to a possible embodiment of the invention.

### Description of Examples

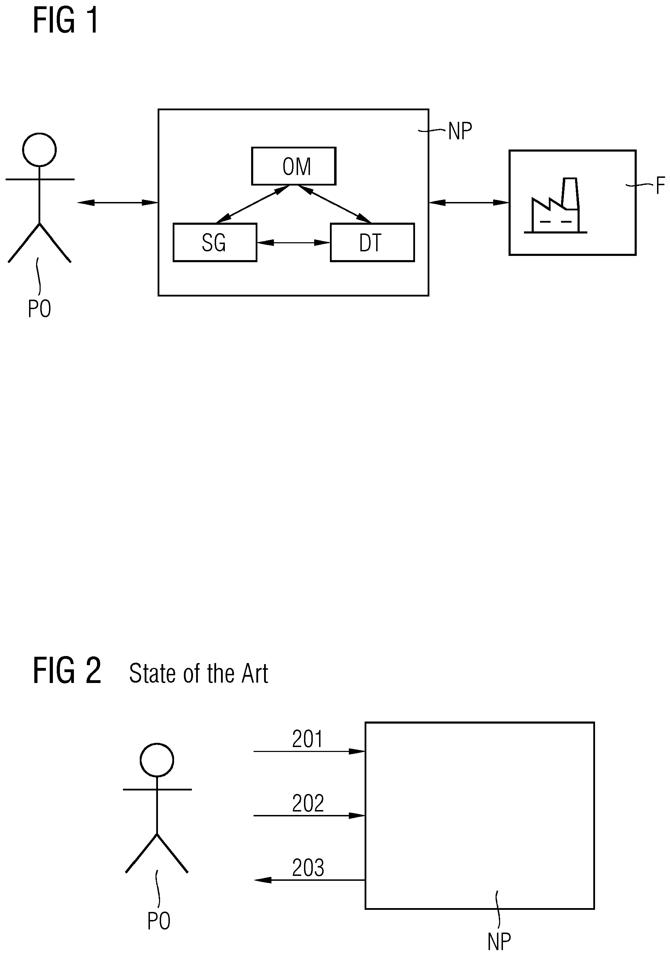

Fig. 2 illustrates a schematic chart of user interactions between a user- here a process operator PO - and a network planning tool NP according to the state of the art.

Industrial applications such as industrial control applications being executed in a factory environment typically have to obey real-time Quality of Service (QoS) requirements, including deterministic upper bound delay and a zero-packet loss. It is crucial for industrial networks to provide these guarantees to ensure seamless operation. This is commonly achieved by utilizing specialized networking protocols, standards, and architectures such as PROFINET and Time-Sensitive Networking (TSN). However, planning, realizing, and deploying such networks is not an easy task due to the complexity of these systems and the stringent requirements they must meet.

Indeed, planning, realizing, and deploying such networks is not a straightforward task. Therefore, factory or plant operators PO often rely on special-purpose network planning tools NP, such as a commonly known engineering platform known as TIA Portal (Totally Integrated Automation Portal). The conceptual architecture of such network planning tools NP may illustrate a complexity of these systems and the intricate processes involved in planning and deployment if industrial networks

Prior to initiating network planning, a plant operator PO may typically engage in one or more of the following interactions. In an initial step, an entire infrastructure of an industrial network must be determined at a factory level. The infrastructure to be determined may usually include industrial devices such as robot arms and compute servers. The model of the entire infrastructure is then supplied to a data model. This data model, representing a comprehensive infrastructure of the industrial network, may then be provided as a first input 201 to the network planning tool NP.

By a second input 202, a network planning procedure must be configured and triggered in the network planning tool NP. By a third output 203, results from the network planning tool NP may be retrieved by the plant operator and manually deployed in the industrial network. In the case of reconfigurations, changes must be made accordingly.

This known workflow of utilizing traditional network planning tools NP infrastructure has a number of drawbacks:
- Gathering information about the network infrastructure within a factory may be a laborious task, requiring significant effort from engineers, which may be costly.
- Obtaining performance models for describing industrial devices located in a factory is a time-consuming task.
- Often, industrial network planning tools NP may merely support a limited number of devices, network architectures, and protocols (e.g., PROFINET or TSN) specific to certain vendors. As a result, implementing significant structural modifications with state-of-the-art tools without changing the network planning tool NP is usually not feasible.
- Typically, state-of-the-art network planning tools NP have limited scalability. They are executed as monolithic applications on a single dedicated server.
- Deploying the result generated by the network planning tools NP is also typically done manually. This process can be time-consuming, resource-intensive, and anything but seamless.

An alternative option for planning and reconfiguring industrial networks is to use scalable network planning solutions developed for cloud and Wide Area Networks (WAN), such as GNS3. However, these solutions typically do not provide industrial guarantees (i.e., real-time operation), limiting their applicability to planning industrial networks.

In view of these drawbacks described above, it is an object of the present embodiments to enhance a flexibility in configuring and re-configuring industrial networks leveraging modern of digital twins, cloud computing, and other advanced technologies to arrive at a more flexible, scalable, and efficient approach.

FIG. 1 illustrates a schematic chart of internal and external interactions of a network planning appliance NP according to embodiments disclosed herein. The network planning appliance NP according to FIG. 1 - being dissimilar to the network planning appliance of FIG. 2 - features a digital twin interface module DT for accessing at least one digital twin, an orchestration module OM including a user interface for receiving input from a user and
a validation module SG.

A bidirectional data exchange with a factory environment F serves both to implement or deploy a result or solution generated by the network planning tools NP in the - not shown - industrial network and to gather information about the network infrastructure within a - not shown - factory. According to the embodiments, the act of gathering or obtaining information about the network infrastructure is facilitated through an access to and evaluation of at least one digital twin for defining network entities, attributes of network entities and/or connections between network entities.

These digital twins may be stored or executed in various places such as devices, industrial computers, servers, or network nodes within a cloud computing environment or factory environment F. The network planning appliance NP may access these digital twins by its digital twin interface module DT. The act of accessing a digital twin may involve temporarily duplicating a digital twin being stored or executed in the factory environment F, storing the duplicated digital twin in a memory assigned to the network planning appliance NP, and reading or accessing the temporary duplicate of the digital twin network by the planning appliance NP.

A digital twin is a digital representation of a physical thing such as an asset, building, vehicle, equipment, part, person, etc. The digital twin may comprise spatial and dimensional information, materials, assembly instructions, constituent components, manufacturer information, ownership information, and any other descriptive data or metadata associated with a part, component, sub-assembly, assembly, etc. The digital twin model may be designed to be an exact replicate of the physical object, and may contain information that makes it act, in a simulation, as its corresponding physical object. Thus, the digital twin model may be an exact replica of the physical working model, and it may be used to simulate an exact situation and produce a result as it is done by the physical twin. The digital twin may be composed of smaller or lower-level digital twins. For example, a motor within a conveyor belt may have its own separate digital twin apart from the conveyor belt itself. The conveyor belt may consist multiple assemblies, and each assembly may be made of multiple sub-assemblies, etc., in a tiered or tree structure down to a component level. Each tier/level assembly or component may have its own digital twin.

The digital twin may describe a class of a thing, for example, an industrial 5G router that utilizes industrial communication protocols in conjunction with 5G communications that allow it to transmit industrial data in real time for industrial applications with assets that are constantly on the move or difficult to access. Such general information may be shared among users and non-users alike without compromising the router itself. However, the digital twin may also describe specific instances within the class, i.e., a specific industrial 5G router. This instance inherits the general characteristics of this particular class of industrial 5G routers, but it may also include information specific to this instance, such as a unique device identifier or credentials used by the industrial 5G router for authorizing its communication. Credentials embedded or stored within the industrial 5G router may help in verifying the identity of the device and ensuring that only authorized devices may connect to and communicate over the inustrial 5G network. Making such information publicly available for a specific instance of the industrial 5G router may compromise its usability, and therefore should not be publicly available. Unauthorized users could potentially use these credentials to gain access to the network, which could lead to data breaches or other security issues.

Turning back to FIG. 2, a possible method according to the embodiment will now be elucidated. The plant operator PO may be a user PO wishing to configure or re-configure the industrial network. The plant operator PO may issue requests to the network planner NP and thereby trigger generating, testing and/or verifying a new network configuration in accordance with an intent which may be determined by the orchestration module OM in correspondence to the received request or input as provided by the plant operator PO

There may be two or more types of requests, including a factory state request and an intent request: By issuing a factory state request, a plant operator PO may request the network planning appliance NP to provide information included in a digital twin pertaining to a factory level, wherein the requested information may pertain to the network and/or computer infrastructure (e.g., location of devices, capabilities, etc.). By issuing an intent request, a plant operator PO may trigger the network planning appliance NP to generate, test and/or verify a newly configured or re-configured network configuration based on an intent. The intent may be entered by the plant operator PO, or the intent may be derived from one or more inputs of the plant operator PO.

The factory environment F may virtually represent a factory administered by the plant operator PO. The factory environment F may numerous components such as one or more industrial network segments, compute infrastructure, field device etc.

The network planning appliance NP may be utilized by the plant operator PO for amending the configuration, e.g. generating and testing network (re-) configuration changes before deploying these configurations within the factory environment F. These changes may eventually fulfill the intent of plant operator PO, including, for example, a requirement of industrial grade quasi-real-time QoS communication. The network planning appliance NP may include the following modules:
- The orchestration module OM may include a - not shown - user interface for receiving input from a user or the plant operator PO. This user interface may be realized as a graphical user interface or GUI, or as an Application Programming Interface or API. The orchestration module OM may determine an intent corresponding to the input received by the user interface. The orchestration module OM may further be configured to issue tasks for amending the configuration of the industrial network in conformance with the intent of the plant operator PO. The orchestration module OM may orchestrate some or all tasks to generate, test and/or verify a new network solution which fulfills one or more of the plant operator PO intents.
- The validation module SG may be configured to validate an amended network configuration in conformance with the intent. It may generate a valid network solution fulfilling one or more intents as entered by the plant operator PO or determined by inputs of the plant operator PO. One general intention of a plant operator PO is that any amendments in the industrial network must not change the core virtues of an industrial network, in particular its deterministic character with regard to the deterministic delivery reliability and time duration for transporting messages over the network. Accordingly, the validation module SG may preferably generate solutions which complying with industrial real-time QoS guarantees.
- The digital twin interface module DT may be designed for accessing at least one digital twin defining network entities, attributes of network entities and/or connections between network entities, wherein one or more of said at least one digital twin represent a configuration of the industrial network

In general, a digital twin is a digital representation of a physical thing such as an asset, building, factory, vehicle, equipment, part, person, etc. The digital twin may comprise spatial and dimensional information, materials, assembly instructions, constituent components, manufacturer information, ownership information, and any other descriptive data or metadata associated with a part, component, sub-assembly, assembly, etc. The digital twin may be designed to be an exact replicate of the physical object, and may contain information that makes it act, in a simulation, as its corresponding physical object. Thus, the digital twin model may be an exact replica of the physical working model, and it may be used to simulate an exact situation and produce a result as it is done by the physical twin.

The digital twin may be composed of smaller or lower-level digital twins. For example, a motor within a conveyor belt may have its own separate digital twin apart from the conveyor belt itself. The conveyor belt may consist multiple assemblies, and each assembly may be made of multiple sub-assemblies, etc., in a tiered or tree structure down to a component level. Each tier/level assembly or component may have its own digital twin.

The digital twin may describe a class of a thing, for example, an industrial 5G router that utilizes industrial communication protocols in conjunction with 5G communications that allow it to transmit industrial data in real time for industrial applications with assets that are constantly on the move or difficult to access. Such general information may be shared among users and non-users alike without compromising the router itself. However, the digital twin may also describe specific instances within the class, i.e., a specific industrial 5G router. This instance inherits the general characteristics of this particular class of industrial 5G routers, but it may also include information specific to this instance, such as a unique device identifier or credentials used by the industrial 5G router for authorizing its communication. Credentials embedded or stored within the industrial 5G router may help in verifying the identity of the device and ensuring that only authorized devices may connect to and communicate over the industrial 5G network. Making such information publicly available for a specific instance of the industrial 5G router may compromise its usability, and therefore should not be publicly available. Unauthorized users could potentially use these credentials to gain access to the network, which could lead to data breaches or other security issues.

Some digital twins as used in the proposed embodiments may represent a virtual representation of the whole factory including its infrastructure, capabilities, and an overall state of the industrial network. Some digital twins as used in the proposed embodiments may also track intents provided by the plant operator PO. As used by the proposed embodiments, some or all digital twins may include one of the following types of information:
- A blueprint of the factory, representing the detailed structure of the factory. This may include location of field devices (e.g., robots), location of networking devices or infrastructure - such as cabling topologies, location of switches -, locations of special-purpose industrial hardware devices - such as hardware Programmable Logic Controllers or PLCs -, location of compute infrastructure such as general-purpose servers etc.
- Capabilities of the industrial network and the compute infrastructure. For example, some digital twins may contain information related to possible connectivity options between endpoints in the factory along with capabilities offered by the possible connectivity options, e.g., a network virtualization technology entitled Virtual Extensible LAN or VXLAN tunneling.
- A State of one or more devices in the factory. For instance, in the context of a computing infrastructure, some digital twins may encompass information that delineates which applications are operational on which servers, along with the specific requirements of each application in terms of communication and computation (e.g., the number of processor cores or storage capacity required). In the scenario of field devices, some digital twins may further include information about the current position and state of each device.
- The state of the networking infrastructure. Some digital twins may include data related to logical links or active connections between ports and interfaces, some other digital twins

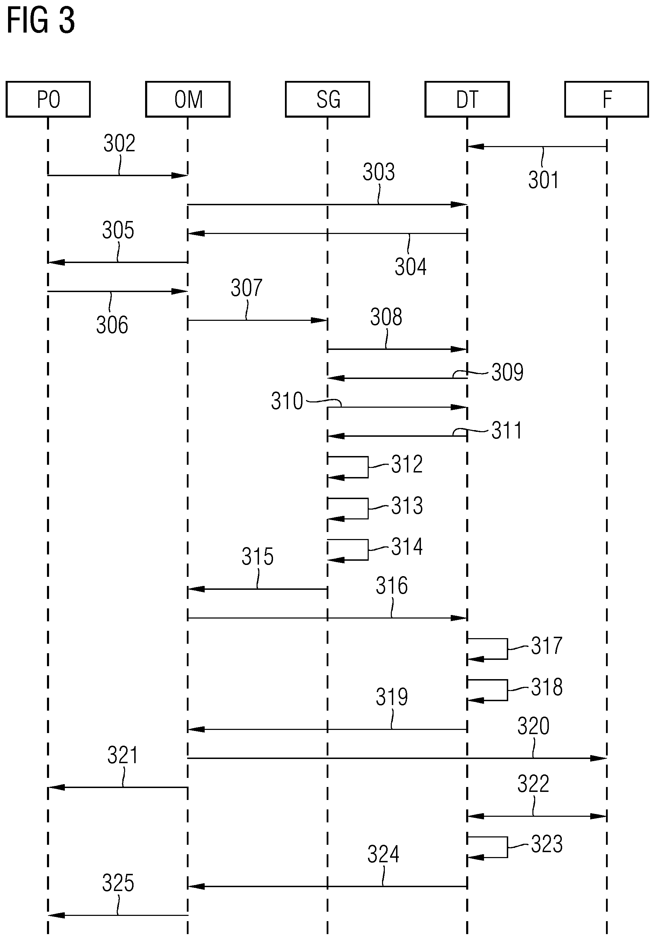

In the following, a sequence diagram as shown in FIG. 3 is employed to illustrate a possible operation of a network planning appliance within an industrial set-up including a factory environment. FIG. 3 shows a schematic process chart akin to a UML or Unified Modeling Language sequence diagram and depicting a chronologically ordered exchange of control and data transfer transmissions amongst various functional units OM, SG, DT and the process operator PO cooperating in a network planning and management. The process may include synchronization, request/response cycles, solution generation, testing, and cloud deployment. Consecutive points in time are chronologically arranged in a vertical direction, so that later points in time are further down than earlier points in time.

In a first optional step, the process operator OP may enter a first factory state request 302 using a graphical user interface of the orchestration module OM. In the course of this request, a second query message 303 may be transferred from the orchestration module OM to the digital twin interface module DT, second query message 303 instructing the digital twin interface module DT to query a factory state from one or more digital twins. Having successfully queried the factory state, the digital twin interface module DT may answer the second query message 303 by a third query response message 304 thereby transmitting the factory state to the orchestration module OM. The orchestration module OM may output the factory state to the process operator OP by sending a fifth report message 305 to the orchestration module OM, where the factory state may be displayed by a graphical user interface of the orchestration module OM. By obtaining the current state of a factory, the process operator PO may decide for possible future actions or amendments accordingly.

In a second step, the process operator OP may enter a request for amending, testing and/or verifying an existing network configuration - or generating a configuration for a new network to be planned - by issuing a sixth intent request 306 to the orchestration module OM. The orchestration module OM may forward the intent request by a seventh intent embedding request 307 sent to the to the validation module SG. The validation module SG may be configured to validate an amended network configuration in conformance with the intent PO - including, if required, real-time QoS guarantees - of the process operator PO. The validation module SG may generate a valid network solution fulfilling the intent as entered by the plant operator PO or determined by inputs of the plant operator PO. For generating an amended network configuration, the validation module SG may now inspect locations, state, capabilities, and application requirements of requested devices located in the factory by a series of read operations 308,...,311 wherein the validation module SG may read out the respective data from respective digital twins as provided by the digital twin interface module DT which may represent a virtual representation of the whole factory. Through a twelfth loop 312, the validation module SG utilizing the information gathered from the digital twins, may now generate a new or amended »solution« or network configuration. This network configuration may include elements such as topology, flow embedding paths, routes, and so on. Subsequently, the validation module SG or, alternatively, the orchestration module OM may generate an update procedure through a thirteenth loop 313. This alternative execution of the thirteenth loop 313 by the orchestration module OM instead of the validation module SG may also apply to one or more of the aforementioned instructions or operations 308-312, which may also be subject to instruction or execution by the orchestration module OM. A primary objective of this update procedure, executed through the thirteenth loop 313, may be to minimize downtime caused by the application of the amended or newly generated network configuration. Subsequently, the validation module SG may generate one or more configuration tests, such as configuration verification test cases. These tests may later be used by, or in conjunction with, a digital twin to verify the practical feasibility of the generated solution. By a fifteenth message 315, the validation module SG may then forward the new or amended network configuration and, optionally, an update procedure and the test cases to the orchestration module OM.

In a second step, a verification of the network configuration in the cloud may ensue. In order to test the network configuration and to verify, whether the network configuration or »solution« may satisfy previously determined configuration requirements, the orchestration module OM may initiate a testing and validation process in a virtual environment of one or more digital twins, preferably hosted in the digital twin interface module DT. To facilitate this, the orchestration module OM may generate and forward a sixteenth request message 316, requesting the digital twin interface module DT for the deployment and verification of digital twins affected in the verification of this network configuration. Through a seventeenth loop 317, the digital twin interface module DT may load these affected digital twins along with virtual images and device models needed for testing the network configuration. For instance, if the configuration - as generated by the orchestration module OM or by the validation module SG - may require a new network element or switch to be installed in the industrial network of the factory, a digital twin modeling a virtual image of this switch may be queried, loaded and/or instantiated by the digital twin interface module DT. Through an eighteenth loop 318, the network configuration may be tested within the digital twin interface module DT using test cases provided by the validation module SG to determine whether the network configuration may indeed satisfy the intent requirements of the plant operator PO. These test cases may include scripts for testing connectivity between two applications, among other complex scenarios. By a nineteenth notification message 319, the digital twin interface module DT may forward the test results to the orchestration module OM.

Through an optional twentieth request message 320, the orchestration module OM may initiate a deployment of the network configuration in the factory environment F. This twentieth request message 320 may be optional, as the procedure according to FIG. 3 could also conclude with merely testing and verification, for example if the generated configuration may be still suboptimal, or if only a simulation was planned from the beginning, where actual deployment was not intended. Through a twenty-first notification message 321 the orchestration module OM may inform the plant operator PO about the success or failure of the provided reconfiguration. If any step fails during the exchange of messages 309,..., 322, the orchestration module OM may notify the plant operator PO that the configuration has failed.

In an optional third step, a continuous monitoring may ensue. Through a continuously practiced bidirectional exchange 322, affected digital twins distributed throughout the factory environment F may continue to be monitored by the digital twin interface module DT. The affected digital twins may maintain their connection to their physical twins - e.g. devices located in the factory - in order to ensure that their virtual representation in the affected digital twins continue to accurately reflect the state of the factory. Through a loop 323, the digital twin interface module DT may periodically check for changes in the state of the factory. In any changes - such as a failure in a switch, server or application - are detected, the affected digital twin or the digital twin interface module DT may trigger the orchestration module OM to test and verify whether the one or more intents previously provided by the plant operator PO are still being met. To this end, the affected digital twin or the digital twin interface module DT may send an instruction message 324, directing the orchestration module OM to detect possible impacts of infrastructural changes and to verify that these impacts still allow the one or more intents previously provided by the plant operator PO to be satisfied. This verification may be done by repeating the procedure during the exchange of messages 306 ,..., 321, whereby, in other words, all affected intents may be re-checked. Finally, if required, the plant operator PO may be notified about possible changes through an information message 325. In summary, this UML sequence diagram illustrates a complex series of interactions in a network planning and management system, encompassing synchronization, request/response cycles, solution generation, testing, and cloud deployment.

The embodiments distinguish themselves from the prior art in the following aspects:
- Utilizing the proposed embodiments, the plant operator PO is not required to manually describe the factory network and infrastructure. The state of the factory may be readily obtained by utilizing one or more pertinent digital twin tightly coupled to each desired site within the factory environment F. One or more digital twins may be seen as a virtual representation of the entire state of a factory at a given point in time or as a live snapshot of the factory. Devices in the factory may constantly communicate with their digital twins, ensuring their digital twin always being up to date. Devices may specifically update their state, location, capabilities, and performance models within their digital twin.
- In contrast to the prior art, the proposed network planner MP may leverage cloud technologies, rendering it significantly more scalable and flexible compared to prior art approaches such as those mentioned above in the introductory section of this disclosure. More precisely, the digital twin may be hosted in the cloud to enhance scalability.
- Prior to deploying a generated »solution«, i.e. deploying a network plan and/or a (re-) configuration, the solution may be verified by the validation module SG, ensuring that the planning solution is valid. According to embodiments, the validation module SG may itself utilize a digital twin for this purpose. According to further embodiments, the digital twin utilized by the validation module SG for the purpose of validation may be outside the validation module SG or even outside the network planning appliance. According to an advantageous embodiment, the verification process may be operated at any suitable place in a cloud computing environment or factory environment F. As the embodiments facilitate distributed hosting of digital twins in the cloud, the verification process is seamless and scalable. Both of these attributes are credited to the fact that the outsourced verification advantageously does not impact resources within the network planning appliance NP itself.

The present embodiments relate to network planning appliance designed for configuring entities in an industrial network. It includes a digital twin interface module for accessing one or more digital twins, which define network entities, their attributes, and connections, representing the network's configuration. The appliance also features an orchestration module with a user interface for receiving user input and determining corresponding intents. The orchestration module issues tasks to amend the network configuration in line with the intents. A validation module validates the amended network configuration to ensure it conforms to the intent.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A network planning appliance for configuring network entities in an industrial network, the network planning appliance including:
- a digital twin interface module (DT) for accessing at least one digital twin defining network entities, attributes of network entities and/or connections between network entities, wherein one or more of said at least one digital twin represent a configuration of the industrial network;
- an orchestration module (OM) including a user interface for receiving input from a user and for determining an intent corresponding to the received input, orchestration module (OM) being configured to issue tasks for amending the configuration of the industrial network in conformance with the intent;
- a validation module (SG) configured to validate the amended network configuration in conformance with the intent.

2. The network planning appliance according to claim 1, wherein amending the configuration of the industrial network includes issuing tasks for generating, testing and/or verifying the network configuration in conformance with the intent.

3. The network planning appliance according to claim 1, wherein determining an intent corresponding to the received input comprises obtaining context information including a history of interactions between the user and the network planning appliance and determining the intent based on the context information.

4. The network planning appliance according to claim 1, wherein determining an intent corresponding to the received input comprises inflecting an objective from the received input the further objective being treated as intent and determining tasks and measures to be implemented in the industrial network to achieve this intent.

5. A method for configuring network entities in an industrial network, the network planning appliance including the steps of:
- accessing, by a digital twin interface module (DT), at least one digital twin defining network entities, attributes of network entities and/or connections between network entities, wherein one or more of said at least one digital twin represent a configuration of the industrial network;
- receiving, by an orchestration module (OM), input from a user and for determining an intent corresponding to the user input and issuing tasks for amending the configuration of the industrial network in conformance with the intent;
- validating, by a validation module (SG), the amended network configuration in conformance with the intent.

6. The method according to claim 4, including the step of continuously or periodically checking digital twins spread across said network entities in the industrial network to identify state changes related to network entities, attributes of network entities and/or connections between network entities.

7. The method according to claim 4, including the step of implementing the network configuration in the network entities of the industrial network.
